# EUROPEAN PATENT SPECIFICATION

(11) **EP 3 592 536 B1**
(45) Date of publication and mention of the grant of the patent: **08.06.2022**
(21) Application number: 18849409.0
(22) Date of filing: 06.03.2018
(51) Int. Cl.: F21S 45/60, B29C 65/00, B60Q 1/00, B29C 65/08, B29L 31/26, B29L 31/00, B29L 11/00

(54) **LED SIGNAL/PARKING LIGHT**
LED-SIGNAL/PARKLICHT
FEU DE SIGNALISATION/STATIONNEMENT À DEL

(30) Priority: 06.03.2017 TR 201703370
(43) Date of publication of application: 15.01.2020
(73) Proprietor: Serdar Plastik Sanayi Ve Ticaret Anonim Sirketi, 06395 Sincan/Ankara (TR)
(72) Inventor: TÜTEK, Serdar, 06395 Sincan/Ankara (TR)
(74) Representative: Weickmann & Weickmann PartmbB
(86) International application number: PCT/TR2018/000019
(87) International publication number: WO 2019/083469

(56) References cited:
- CN-A- 103 968 315
- CN-U- 204 665 091

## Description

The present invention relates to highly hermetic LED signal/parking light used especially at the tractors, heavy equipment, forklift and commercial vehicles at the automotive sector.

### Technical Field of the Invention

The present invention relates to highly hermetic LED signal/parking light used especially at the tractors, heavy equipment, forklift and commercial vehicles at the automotive sector.

### State of the Art

The thermoset (non-recyclable rubber) sealing components such as the gasket, O-ring, etc. are compressed and used at the prior art lamps installed to the tractors, heavy equipment, forklift and commercial vehicles. Said sealing components offer sealing generally from a single point and they lose their sealing properties due to user errors during lamp replacement or in case of malfunctioning of the lamp or due to deformations occurring in time, thus causing failure of the lamp, or shortening the service live of the lamp.

In the prior art, the lamp is either assembled or dismantled by applying pressure on the bolt installed on the frame during injection. As replacement of these bolts that suffer from deformation in time is not possible, such bolts cause the lamp to become unserviceable or shorten their service life. CN 103968315 A discloses an LED for an automobile lamp having improved power consumption and also a better appearance thanks to the use of a cover for the wiring.

In the signal/parking light of the invention it is possible to achieve complete sealing between the lens welded on the frame via UW (ultrasonic welding) method and the frame as the special design U-shaped sealing gaskets (thermoplastic material TPV) applied with UW (ultrasonic welding) method that achieve full sealing from total of 4 points, two at the sides and two at the bottom, and the sealing problems arising from user errors are thus minimized. Furthermore, the resilient structure of the bolt assembly zone available on the frame and the fact that the bolts can be attached to the frame later allows replacement of the bolts that became corroded in time or deteriorate due to user errors, thus enable replacement of the bolt without shortening the service life of the light or without rendering it useless. The socket is installed directly to the frame as the slot, in which the socket, which will be attached to the light frame, will be inserted that was self-removed during the injection on the frame, is removed as a part of the frame during injection on the frame. In this manner, rupture of the cables protruding from the frame due to external factors is prevented.

### Brief Description of the Invention

The subject matter of the present invention is a LED signal/parking light made of fully recyclable thermoplastic material, and it is aimed to solve the sealing problems experienced in the prior art lights. In the LED signal/parking light of the invention, it is possible to achieve full sealing by installing the special u-shaped thermoplastic gasket that ensures sealing from total of 4 points, two at the sides and two at the bottom, and by welding the lens onto the frame that accommodate the socket installation region by employing the UW (ultrasonic welding) method. The entire light is not scraped due to the problems experienced at the anchoring bolts during assembly and dismantling of the light, and is characterized in that it withstands the torque value as equal to the bolt system installed within the mold when the bolt is installed on the frame wherein the anchoring bolts allow replacement without causing any sealing problem and damaging the interior of the light by virtue of the resilient structure of the bolt installation zone.

### Brief Description of the Figures

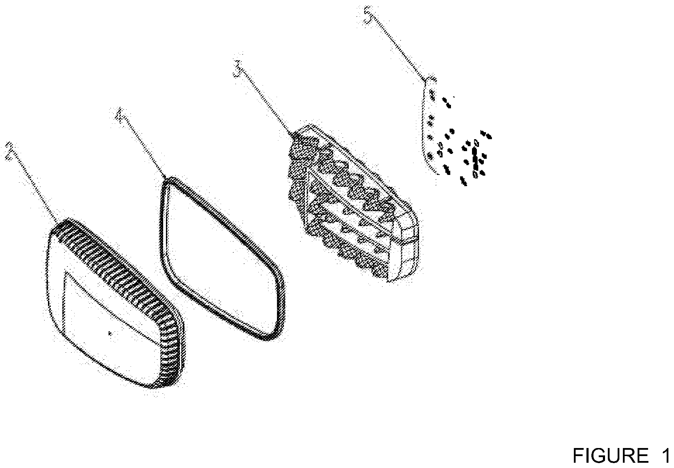

**Figure 1****.** The exploded view of the LED Signal/Parking Lamp

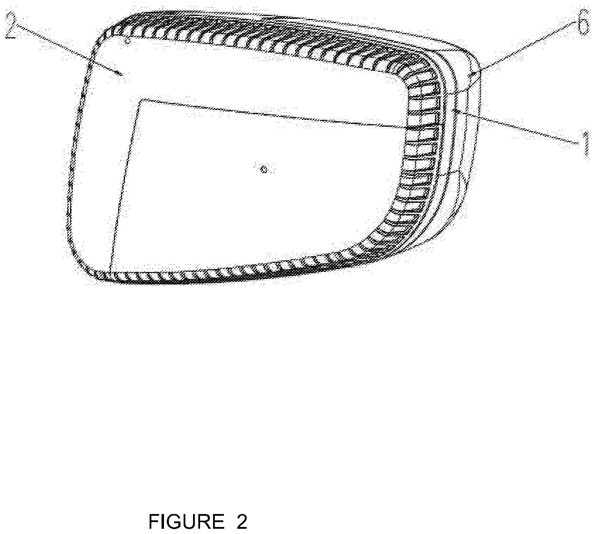

**Figure 2****.** Perspective rear view of the LED Signal/Parking Lamp

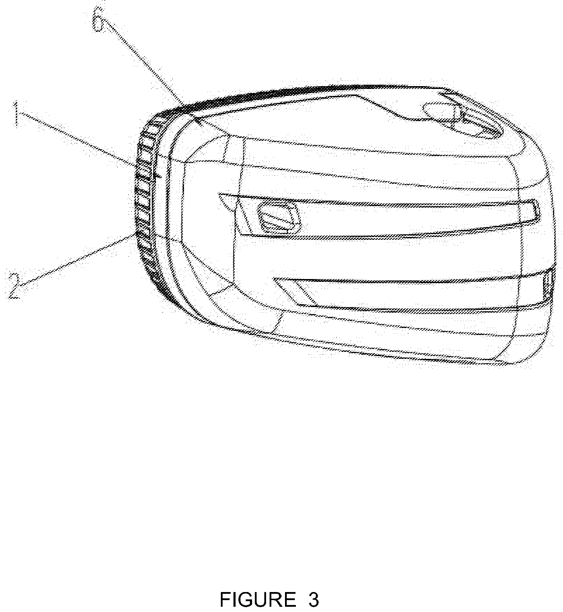

**Figure 3****.** Perspective front view of the LED Signal/Parking Lamp

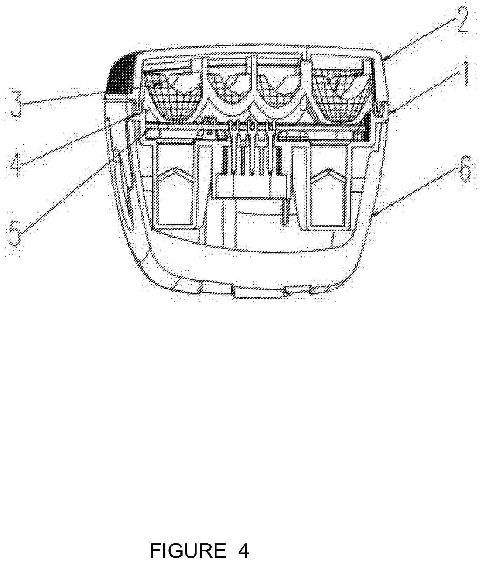

**Figure 4****.** Detailed interior view of the Stop Signal Lamp

### List of References Used in the Figures

- 1-: Frame
- 2-: Lens
- 3-: Reflector
- 4-: Gasket
- 5-: LED card
- 6-: Decorative cover
- 7-: Anchoring bolt
- 8-: Nut
- 9-: Washer
- 10-: Decorative cover fitting screw

The subject matter of the present invention is the LED signal/parking light comprising of special design thermoplastic (recyclable plastic) gasket system achieving full sealing from total of 4 points, two at the sides and two at the bottom, against the sealing problems experienced at the gaskets used in the prior art lights, the lens (2) welded on the frame (1) by means of UW (ultrasonic welding) method which accommodates the socket installation zone thereon due to the problems experienced such as cable rupture, characterized in that the light allows replacement of the bolts (7) by virtue of the resilient bolt installation zones on the frame (1).

## Claims

1. The LED signal/parking light suitable for use at tractors, heavy equipment, forklift and commercial vehicles at the automotive sector, the light comprising a frame (1), an LED card (5) placed on flexible clips within the frame (1) that contain the socket installation zone thereon, a reflector (3) installed on the LED card (5), a lens (2) installed on the reflector (3) and welded thereon by means of ultrasonic welding (UW) method, a gasket (4), bolt (7), nut (8) and washer (9) configured for attaching the frame (1) to the respective equipment, a decorative cover (6) and a fitting screw (10) configured for complementing the connection,
**characterized in that** the gasket (4) is a special design U-shaped gasket made of thermoplastic material TPV and is applied with UW method that achieves full sealing from total of 4 points, two at the sides and two at the bottom between the lens (2) and the frame (1).

2. A LED signal/parking light according to claim 1, **characterized in that** the frame (1) contains resilient bolt installation zones that allow replacement of the anchoring bolts (7).

3. A LED signal light according to claim 1 or 2, **characterized in that** the frame (1) accommodates the socket installation zone in its structure in order to prevent rupture of the cables used for energizing the lamp due to external factors.

## Patentansprüche

1. LED-Signal-/Parkleuchte, die für den Einsatz an Traktoren, schweren Geräten, Gabelstaplern und Nutzfahrzeugen im Automobilsektor geeignet ist, wobei die Leuchte einen Rahmen (1), eine LED-Karte (5), die auf flexiblen Clips innerhalb des Rahmens (1) platziert ist, die den Fassungsinstallationsbereich darauf enthalten, einen Reflektor (3), der auf der LED-Karte (5) installiert ist, eine Linse (2), die auf dem Reflektor (3) installiert und mittels eines Ultraschallschweißverfahrens (UW) auf diesen geschweißt ist, eine Dichtung (4), eine Schraube (7), eine Mutter (8) und eine Unterlegscheibe (9), die für die Anbringung des Rahmens (1) an dem jeweiligen Gerät konfiguriert sind, eine dekorative Abdeckung (6) und eine Passschraube (10), die für die Vervollständigung der Verbindung eingerichtet ist,
**dadurch gekennzeichnet, dass** die Dichtung (4) eine speziell gestaltete U-förmige Dichtung aus thermoplastischem Material TPV ist und mittels UW-Verfahren angebracht ist, das eine vollständige Abdichtung von insgesamt 4 Punkten erreicht, zwei an den Seiten und zwei am Boden, zwischen der Linse (2) und dem Rahmen (1).

2. LED-Signal-/Parkleuchte nach Anspruch 1, **dadurch gekennzeichnet, dass** der Rahmen (1) elastische Schraubeninstallationsbereiche enthält, die einen Austausch der Verankerungsschrauben (7) ermöglichen.

3. LED-Signalleuchte nach Anspruch 1 oder 2, **dadurch gekennzeichnet, dass** der Rahmen (1) den Fassungsinstallationsbereich in seiner Struktur aufnimmt, um einen Bruch der für die Stromversorgung der Leuchte verwendeten Kabel aufgrund äußerer Faktoren zu verhindern.

## Revendications

1. Feu de direction/stationnement à DEL approprié pour une utilisation au niveau de tracteurs, de matériel lourd, d'un élévateur à fourche et de véhicules utilitaires dans le secteur automobile, le feu comprenant un encadrement (1), une carte à DEL (5) placée sur des pinces flexibles dans l'encadrement (1) qui contiennent la zone d'installation de douille sur celles-ci, un réflecteur (3) installé sur la carte à DEL (5), une lentille (2) installée sur le réflecteur (3) et soudée sur celui-ci au moyen d'un procédé de soudage ultrasonique (UW), un joint (4), un boulon (7), un écrou (8) et une rondelle (9) configurés pour fixer l'encadrement (1) au matériel respectif, un cache décoratif (6) et une vis de serrage (10) configurée pour compléter la liaison,
**caractérisé en ce que** le joint (4) est un joint en forme de U de conception spéciale fait d'un matériau thermoplastique TPV et est appliqué avec un procédé UW qui obtient une étanchéité complète à partir d'un total de 4 points, deux sur les côtés et deux au fond entre la lentille (2) et l'encadrement (1).

2. Feu de direction/stationnement à DEL selon la revendication 1, **caractérisé en ce que** l'encadrement (1) contient des zones élastiques d'installation de boulons qui permettent un remplacement des boulons (7) d'ancrage.

3. Feu de direction à DEL selon la revendication 1 ou 2, **caractérisé en ce que** l'encadrement (1) comporte la zone d'installation de douille dans sa structure afin d'éviter la rupture des câbles utilisés pour alimenter en courant la lampe en raison de facteurs externes.
